# EUROPÄISCHE PATENTSCHRIFT

(11) **EP 3 326 720 B1**
(45) Veröffentlichungstag und Bekanntmachung des Hinweises auf die Patenterteilung: **03.11.2021**
(21) Anmeldenummer: 16200189.5
(22) Anmeldetag: 23.11.2016
(51) Int. Cl.: B02C 15/00, B02C 23/30, C04B 7/52, C04B 20/02, C04B 28/02, C04B 28/04

(54) **VERFAHREN ZUM AUFBEREITEN VON MEHRPHASEN-MINERAL-ROHSTOFFEN**
METHOD FOR THE TREATMENT OF MULTI-PHASE MINERAL RAW MATERIALS
PROCÉDÉ DE PRÉPARATION DE MATIÈRES PREMIÈRES MINÉRALES MULTIPHASES

(43) Veröffentlichungstag der Anmeldung: 30.05.2018
(73) Patentinhaber: Loesche GmbH, 40549 Düsseldorf (DE)
(72) Erfinder: ZYSK, Karl-Heinrich, 40549 Düsseldorf (DE); TÜBERGEN, Stefan, 40549 Düsseldorf (DE)
(74) Vertreter: Wunderlich & Heim Patentanwälte Partnerschaftsgesellschaft mbB

(56) Entgegenhaltungen:
- EP-A2- 0 292 739
- DE-A1- 2 019 005
- DE-U- 7 234 679

## Beschreibung

Die Erfindung betrifft ein Verfahren zum Aufbereiten von Mehrphasen-Mineral-Rohstoffen für die Verwendung als Bindemittel oder Bindemittelhalbprodukt in der Zementindustrie, welche mindestens zwei unterschiedliche Phasen besitzen, die jeweils zueinander verschiedene Mahlbarkeiten aufweisen.

Diese Rohstoffe werden in einer Mühle-Sichter-Kombination zerkleinert, wobei die Mühle-Sichter-Kombination einen Sichter und eine Mühle aufweist. Mindestens einmal zerkleinerter Rohstoff wird dem Sichter der Mühle-Sichter-Kombination zugeführt und dort in Grob- und Feingut gesichtet.

Im Rahmen der Erfindung kann unter einem Mehrphasen-Mineral-Rohstoff für die Verwendung als Bindemittel oder Bindemittelhalbprodukt insbesondere ein Rohstoff für die Zementindustrie, beispielsweise Portlandzementklinker, welcher auch als Portlandklinker bezeichnet werden kann, Hauptbestandteile der Kompositzemente nach DIN EN 197, andere anorganische Bindemittel wie Tonerdenzemente oder entsprechende Zumahl- und Halbprodukte, verstanden werden.

Bei der Portlandzementherstellung aus Portlandklinker ist es erforderlich, nach dem Brennen und Abkühlen des Klinkers, diesen zu zerkleinern. Hierfür werden Mühlen eingesetzt, die den gebrannten Portlandzementklinker bis auf eine Feinheit von ca. 6000 Blaine aufmahlen. Es ist beispielsweise bekannt, hierzu Kugelmühlen einzusetzen.

Um eine sichere und ausreichende Feinheit des gemahlenen Produktes zu erreichen, ist es üblich, das einmal gemahlene Produkt einer Sichtung zu unterziehen, um noch nicht ausreichend zerkleinertes Rohmaterial auszuschleusen und einer weiteren Zerkleinerung zum Beispiel Mahlung zuzuführen. Als Sichter werden hierfür beispielsweise statische oder dynamische Sichter oder auch Windsichter eingesetzt. Neben Kugelmühlen werden auch Vertikalwälzmühlen zur Zerkleinerung verwendet. Diese haben grundsätzlich einen vorteilhafteren Energiebedarf gegenüber den Kugelmühlen, da sie effizienter arbeiten. Jedoch stellt sich die Steuerung und Regelung dieses Mühlentypes komplexer als bei Kugelmühlen dar. Allerdings bieten die erhöhten Einstell- und Regelungsmöglichkeiten von Vertikalmühlen gegenüber Kugelmühlen, wie aus der Zerkleinerung von anderen Materialien bekannt ist, auch den Vorteil, dass damit nicht nur eine Zerkleinerung des Rohstoffes durchgeführt werden kann, sondern auch Charakteristika und Eigenschaften des Mahlgutes beeinflusst beziehungsweise verändert werden können. EP 0292739 A2 offenbart ein Verfahren und eine Anlage zur Zerkleinerung von sprödem Mahlgut, beispielsweise von Zementklinker, mit einer Mühle-Sichter-Kombination. Ein einstellbarer Teil der vom Sichter abgewiesenen Grieße wird aus der Mühle-Sichter-Kombination abgezogen.

Der Erfindung liegt daher die **Aufgabe** zugrunde, ein Verfahren zum Aufbereiten von Mehrphasen-Mineral-Rohstoffen für die Verwendung als Bindemittel oder Bindemittelhalbprodukt anzugeben, welches neben einer effizienten Zerkleinerung auch einen Einfluss auf den gemahlenen Rohstoff ausüben kann.

Diese Aufgabe wird erfindungsgemäß durch ein Verfahren zum Aufbereiten von Mehrphasen-Mineral-Rohstoffen zur Verwendung als Bindemittel oder Bindemittelhalbprodukt mit den Merkmalen des Anspruchs 1 gelöst.

Vorteilhafte Ausführungsformen der Erfindung sind in den Unteransprüchen, der Beschreibung und in der Figur sowie deren Erläuterung angegeben.

Bei einem erfindungsgemäßen Verfahren wird ein Anteil von mindestens 10 M.-% des vom Sichter abgewiesenen Grobgutes aus der Mühle-Sichter-Kombination abgezogen, wobei der Anteil der schwerer mahlbaren Phase des Rohstoffes im Grobgut erhöht ist und das restliche Grobgut wieder der Mühle zugeführt wird. Zumindest das Feingut wird dann einer Verwendung als hydraulisches Bindemittel oder Zusatzstoff für die Zementindustrie zugeführt.

Im Sinne der Erfindung kann unter Abziehen des Grobgutes aus der Mühle-Sichter-Kombination insbesondere das Ausschleusen aus dem Mahlprozess verstanden werden, so dass das Grobgut nicht mehr weiter zur Zerkleinerung in Feingut zur Verfügung steht.

Der Erfindung liegt die Erkenntnis zugrunde, dass bei einer Zerkleinerung, insbesondere von Mehrphasen-Mineral-Rohstoffen und anschließender Sichtung, in der Mühle-Sichter-Kombination nicht nur eine reine Zerkleinerung realisiert wird, sondern eine selektive Zerkleinerung beziehungsweise, dass die Mühle-Sichter-Kombination auch als Trennaggregat fungiert. Entsprechend der Erfindung wurde erkannt, dass sich Materialien mit einer schwereren oder schlechteren Mahlbarkeit im Grobgut anreichern. Dies widerspricht der bisherigen Annahme, dass es im Grobgut nicht zu einer wesentlichen Anreicherung einer Komponente oder Phase kommt, sondern dass dort lediglich nicht ausreichend zerkleinertes Material vorhanden ist, welches eine ähnliche Verteilung wie im Ausgangsrohstoff hat.

Basierend auf der Erkenntnis der Anreicherung der schwerer mahlbaren Phase im Grobgut wird die Erfindung im Folgenden unter Bezugnahme auf das Beispiel der Zerkleinerung von Portlandklinker näher erläutert.

Portlandklinker weist zwei mineralische Hauptphasen auf, die im Wesentlichen für die Erhärtung, das heißt die Hydratation des Zementes verantwortlich sind. Bei diesen Phasen handelt es sich um Alit (C3S, Tricalciumsilikat) und Belit (C2S, Dicalciumsilikat), jeweils in mineralogischer Notation. Hierbei ist bekannt, dass Alit im Vergleich zu Belit eine höhere Reaktivität und einen stärkeren Einfluss auf die schnelle hydraulische Erhärtung hat. Dem gegenüber ist Belit weniger reaktiv, leistet allerdings dennoch einen Beitrag für die langfristige Erhärtung.

Der Erfindung liegt die Erkenntnis zugrunde, dass bei dieser Materialkombination Belit eine deutlich schlechtere Mahlbarkeit aufweist als Alit. Im Sinne der Erfindung kann unter Mahlbarkeit insbesondere verstanden werden, dass ein Material im Vergleich zu einem anderen Material schwieriger zu zerkleinern ist, das heißt dass mehr Energie in die Zerkleinerung investiert werden muss beziehungsweise dass bei der Zerkleinerung in einer Vertikalwälzmühle mehrere Mahldurchgänge notwendig sind.

Laut der erfindungsgemäßen Erkenntnis der Anreicherung der schwerer zu mahlenden Phasen im Grobgut, kann dies insofern genutzt werden, dass gezielt Grobgut aus dem Mahlkreislauf abgezogen wird. Mit anderen Worten wird im Feinstkorn Alit angereichert, indem der Belitanteil verringert wird. Dies hat zur Folge, dass der somit entstehende Portlandzement einen deutlich höheren Alitanteil aufweist als der in die Mahlung gegebene Portlandzementklinker. Die Folgen für das Endprodukt sind, dass dieses eine schnellere und höhere Festigkeit aufweist als ein klassischer Portlandzement, der die ursprüngliche Anteilsverteilung von Alit zu Belit besitzt.

Bevorzugt wird als Mühle eine Vertikalmühle mit einem Mahlteller und Mahlwalzen verwendet. Grundsätzlich kann eine Vielzahl von Mühlentypen bei dem erfindungsgemäßen Verfahren zum Einsatz kommen. Es hat sich jedoch herausgestellt, dass gerade bei der Verwendung einer Vertikalwälzmühle in einer Mühle-Sichter-Kombination die Anreicherung der schwerer mahlbaren Phase im Rohstoff als Grobgut des Sichters in derartigem Maße erfolgt, dass es für die Ausführung der Erfindung vorteilhaft ist. Je nach verwendetem Mühlentyp findet auch eine geringere Anreicherung statt, so dass beim Abzug eines Teils des Grobgutes aus dem Mahlkreislauf auch ein großer Teil der leichter mahlbaren Phase abgezogen wird. So wird die Verschiebung der Phasenzusammensetzung im Feingut in Richtung der besser mahlbaren Phase geringer.

Die Mühle-Sichter-Kombination kann insbesondere im Luftstrommodus betrieben werden, wobei der zerkleinerte Rohstoff mittels eines Prozessgasstroms zum Sichter der Mühle-Sichter-Kombination geführt wird. Es sind verschiedene Betriebsarten für Mühle-Sichter-Kombinationen bekannt. Beispielsweise kann eine Mühle-Sichter-Kombination, welche eine Vertikalmühle verwendet, auch im Überlaufmodus eingesetzt werden. Im Rahmen der Erfindung bietet der Luftstrommodus jedoch den Vorteil, dass es mittels des Luftstroms einfach ist, den mindestens einmal zerkleinerten Rohstoff zum Sichter der Mühle-Sichter-Kombination zu führen. Zusätzlich ergibt sich ein weiterer Vorteil, der durch das Abziehen eines Teils des Grobgutes im Verhältnis zu einem Verfahren, bei dem kein Ausschleusen stattfindet, erreicht wird. Indem tendenziell kleinere und leichtere Partikel im Mahlgut vorhanden sind, kann die Luftströmung geringer ausfallen, wodurch der Energieaufwand für den Betreib der Mühle-Sichter-Kombination erheblich verringert wird.

Vorteilhaft ist es, wenn das Grobgut anteilig über eine mit einem Grießekonus in Verbindung stehende Einrichtung, beispielsweise eine Förderschnecke, abgezogen wird. Als Grießekonus kann im Rahmen der Erfindung eine konusartige oder trichterförmige Einrichtung bezeichnet werden, in der das vom Sichter abgewiesene Grobgut, welches auch als Grieß bezeichnet wird, aufgefangen wird und die dazu dient, das Grobgut beziehungsweise die Grieße oder das Grieß wieder zurück auf den Mahlteller zu führen.

Grundsätzlich können verschiedene Einrichtungen verwendet werden, um das Grobgut abzuleiten. Wird ein separater Sichter eingesetzt, ist es möglich, vor der, insbesondere pneumatischen, Rückführung des Grobgutes in die Mühle einen Teil davon abzutrennen. Gerade bei der Verwendung eines Grießekonus einer Mühle-Sichter-Kombination in Kombination mit einer Förderschnecke bietet sich der Vorteil, dass kaum weitere Energie mehr für eine Förderung verwendet werden muss.

Durch den Anteil des abgezogenen Grobgutes aus dem Mahlprozess kann die Zusammensetzung des Feingutes und damit des hydraulischen Bindemittels oder des hydraulischen Zusatzstoffes angepasst werden. Mit anderen Worten wird, wenn wie zuvor beispielhaft beschrieben, dadurch dass im Grobgut ein erhöhter Belitanteil vorhanden ist und dieses anteilig aus dem Mahlkreislauf und der Aufbereitung abgezogen wird, der prozentuale Anteil des Alits im Feingut erhöht. Hierdurch kann auf die Eigenschaften, zum Beispiel die Zusammensetzung des Feingutes, in einfacher Weise eingegriffen werden.

Im Verfahren gemäß der Erfindung wird auch ein Sulfatträger im Feingut angereichert. Dieser Eigenschaft liegt die Erkenntnis zugrunde, dass die Sulfatträger beispielsweise bei Portlandzementklinker wie zum Beispiel Gips, Anhydrit oder Halbhydrat meist eine relativ gute Mahlbarkeit aufweisen. Somit wird durch das Verfahren gezielt der Sulfatträger im Feingut angereichert. Das hat den Nutzen, dass im Gegensatz zu anderen Zementaufmahlverfahren, bei denen nachträglich explizit separat ein Sulfatträger hinzudosiert werden muss, dies bereits im Rahmen der Mahlung erfolgen kann und so keine zusätzlichen Einstellmaßnahmen und Dosierungsvorgänge mehr nötig sind. Vorteilhaft ist es, wenn wie bereits exemplarisch beschrieben, als Mehrphasen-Mineral-Rohstoff Portlandzementklinker verwendet wird, der die Hauptphasen Alit und Belit aufweist, wobei Belit eine schlechtere Mahlbarkeit als Alit aufweist. Im üblichen Portlandklinker liegt die Aufteilung zwischen Alit und Belit im Verhältnis 3:1 bis 6:1. Dieses kann durch die Erfindung in Richtung von Alit verschoben werden.

Ein anderer Mehrphasen-Mineral-Rohstoff ist beispielsweise Alinitzement, der die Phasen Alinit und Belit aufweist, wobei Belit eine schlechtere Mahlbarkeit als Alinit hat. Weitere Beispiele für geeignete Mehrphasen-Mineral-Rohstoffe sind Calciumaluminatsulfatzement mit den Hauptphasen Calciumaluminat und Belit, wobei hierbei Belit wiederum die schlechtere Mahlbarkeit aufweist. Das Verfahren kann beispielsweise auch auf die bei Tonerdenzementen unterschiedlichen Mineralphasen kalkreichem C₁₂A₇ und kalkärmerem CA₂ ausgedehnt werden.

Bevorzugt ist es, wenn das abgezogene Grobgut einer weiteren separaten Zerkleinerung zugeführt wird. Beispielsweise ist es möglich, in einer zweiten Mühle oder in einem anderen Betriebszustand oder Verfahrensschritt explizit das abgezogene Grobgut erneut zu zerkleinern und so einen Zement zu erzeugen, der andere Eigenschaften hat. Zwar hat Belit, wie beschrieben, eine langsamere Reaktionsfähigkeit, diese bietet aber je nach Anwendung auch den Vorteil, dass die entstehende Hydratationswärme über einen längeren Zeitraum abgegeben wird. Somit entsteht weniger Wärme in dem aushärtenden Zement pro Zeiteinheit, was insbesondere bei großen Bauwerken wie Staudämmen oder dergleichen wünschenswert ist.

Eine Möglichkeit das Grobgut weiter zu verarbeiten, insbesondere wenn es sich um Belit handelt, besteht darin, dieses zusammen mit Hüttensand weiter zu zerkleinern. Die Vermahlung von Hüttensand als Zusatzstoff für sogenannte Hüttensandzemente ist bekannt. Da Belit eine ähnliche Mahlbarkeit wie Hüttensand aufweist, eignet es sich gut dafür, mit Hüttensand vermahlt beziehungsweise zerkleinert zu werden und verleiht dem Hüttensandzement eine höhere Wertigkeit.

Die Erfindung wird nachfolgend unter Bezugnahme auf die anliegende Figur erläutert. Hierbei zeigt:

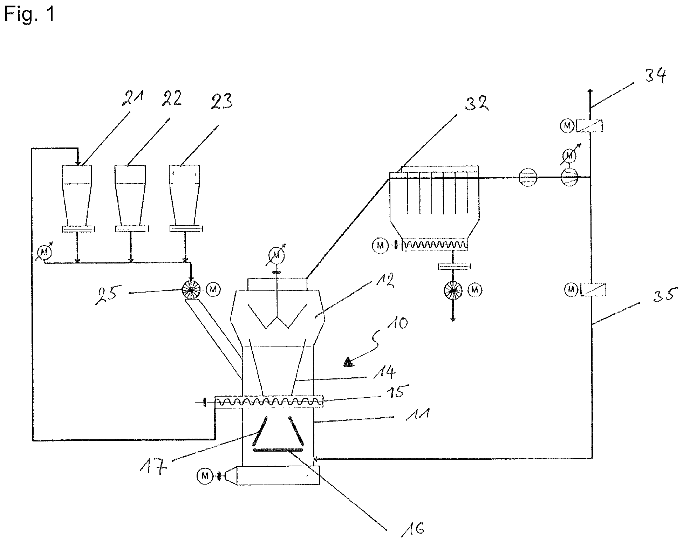

- Fig. 1: einen schematischen Aufbau einer Mahlanlage zum Ausführen des erfindungsgemäßen Verfahrens.

In der schematischen Ansicht in Fig. 1 ist eine Aufbereitungs- und Mahlanlage zum Ausführen des erfindungsgemäßen Verfahrens dargestellt.

Die wesentliche Komponente stellt hierbei eine Mühle-Sichter-Kombination 10 dar, die eine Mühle 11 und einen Sichter 12 aufweist. In Silos 21, 22, 23 befindet sich das zu zerkleinernde Mahlgut. Zur näheren Erläuterung der Erfindung wird im Folgenden von einer Zerkleinerung von Portlandzementklinker ausgegangen. Dieser befindet sich beispielsweise in Silo 22. Er wird über eine Förderstruktur durch eine Zellradschleuse 25 in den Mahlraum der Mühle 11 geleitet.

Die Mühle 11 weist als wesentliche Komponenten einen Mahlteller 16 und darauf abwälzende Mahlwalzen 17 auf, die für die Zerkleinerung des Mahlgutes verantwortlich sind. Die Mühle-Sichter-Kombination 10 selbst wird bevorzugt im Luftstrommodus betrieben. Dies bedeutet, dass mittels eines Mühlengebläses von unterhalb des Mahltellers 16 ein Luftstrom in Richtung des Sichters 12 vorhanden ist. Mittels dieses Luftstroms wird zumindest einmal von den Mahlwalzen 17 gemahlenes Mahlgut zum Sichter 12 befördert.

Im Sichter 12 findet eine Sichtung nach Größe beziehungsweise nach spezifischem Gewicht des Sichtgutes statt. Hierbei wird das Sichtgut vom Sichter 12 in Grob- und Feingut getrennt. Gemäß dem erfindungsgemäßen Verfahren bei der Vermahlung von Portlandklinker, welcher als wesentliche Komponenten Alit und Belit aufweist und angesichts der Tatsache, dass Belit eine schlechtere Mahlbarkeit als Alit aufweist, befindet sich tendenziell ein größerer Anteil von Belit im Grobgut als im aufgegebenen Mahlgut. Dieses Grobgut wird vom Sichter 12 zurückgewiesen und über einen Grießekonus 14 wieder zurück auf die Mahlschüssel 16 zur weiteren Vermahlung geleitet.

Entsprechend der Erfindung ist vorgesehen, dass zumindest ein Teil von 10 M.-% oder mehr des Grobgutes, nicht auf den Mahlteller 16 zurückgeschleust wird, sondern aus dem Mahlkreislauf abgezogen wird. Hierfür kann beispielsweise eine Förderschnecke 15 vorgesehen sein, die das Material aus dem Mahlkreislauf abzieht und zurück in das Silo 21 führt. Grundsätzlich ist es auch möglich, mehr als den 10 M.-% Anteil des Grobgutes abzuziehen. Es ist sogar möglich, das Grobgut komplett aus dem Mahlkreislauf zu entfernen.

Das Feingut wird beispielsweise mittels eines Prozessgasstroms weiter zu einem Filter 32 geführt, in dem es vom Prozessgasstrom abgetrennt wird. Das Feingut kann dann als hochwertiger Portlandzement mit einem erhöhten Alitanteil weiterverwendet werden. Der Prozessgasstrom wird anschließend entweder teilweise über einen Kamin 34 abgeführt oder über eine Prozessgasstromrückführleitung 35 wieder zurück in die Mühle 11 geleitet.

Das abgezogene und im Silo 21 zwischengelagerte Grobgut, welches einen erhöhten Belitanteil aufweist, kann während eines anderen Produktionsschrittes der Mühle 11 wieder zugeführt werden und zum Beispiel für den Fall einer Vermahlung zusammen mit Hüttensand eingesetzt werden. Im Silo 23 kann ein weiterer zu vermahlender Stoff, beispielsweise Gips oder dergleichen vorgesehen sein.

Ein weiterer Vorteil der Mühle-Sichter-Kombination 10, der sich durch den Abzug der Grieße, insbesondere des Belits ergibt, ist, dass die Mühle 11 einen ruhigeren Lauf hat. Somit kann auf Mittel zur Mahlbetthomogenisierung wie beispielsweise eine Wasseraufdüsung verzichtet werden. Auch kann die Mühle 11 unter Umständen mit einem höheren Durchsatz betrieben werden.

Vorteilhaft am erfindungsgemäßen Verfahren ist auch, dass eine erhebliche Energieeinsparung erreicht werden kann. Wenn mittels des Abzugs der Grieße tendenziell weniger schlecht reaktives Material im Feingut vorhanden ist, muss das Material nicht so fein aufgemahlen werden, um eine bestimmte Festigkeitsklasse zu erreichen. Hierdurch kann der notwendige Energiebedarf zum Betrieb der Mühle-Sichter-Kombination 10 verringert werden. In ähnlicher Weise kann ein höherwertiger Zement bei gleichem Energieaufwand hergestellt werden, da der Anteil von tendenziell aktiveren Mahlkomponenten im Feingut erhöht ist.

Mit dem erfindungsgemäßen Verfahren ist es daher möglich, Mehrphasen-Mineral-Rohstoffe für die Verwendung als Bindemittel oder Bindemittelhalbprodukt in einer Weise aufzubereiten, dass sie effizient eingesetzt werden können, ohne den Aufbereitungsaufwand deutlich zu erhöhen.

## Patentansprüche

1. Verfahren zum Aufbereiten von Mehrphasen-Mineral-Rohstoffen für die Verwendung als Bindemittel oder Bindemittelhalbprodukt, welche mindestens zwei unterschiedliche Phasen aufweisen, die jeweils zueinander verschiedene Mahlbarkeiten besitzen,
wobei der Rohstoff mittels Mahlwalzen (17) in einer Mühle-Sichter-Kombination (10) zerkleinert wird,
wobei die Mühle-Sichter-Kombination (10) einen Sichter (12) und eine Mühle (11) aufweist,
wobei mindestens einmal zerkleinerter Rohstoff dem Sichter der Mühle-Sichter-Kombination (10) zugeführt und dort in Grob- und Feingut gesichtet wird,
wobei zumindest das Feingut einer Verwendung als hydraulisches Bindemittel oder Zusatzstoff für die Zementindustrie zugeführt wird
**dadurch gekennzeichnet,**
**dass** zumindest ein Anteil von 10 M.-% des vom Sichter (12) abgewiesenen Grobgutes aus der Mühle-Sichter-Kombination (10) abgezogen wird, wobei der Anteil der schwerer mahlbaren Phase des Rohstoffes im Grobgut erhöht ist und das restliche Grobgut der Mühle (11) wieder zugeführt wird, und
**dass** mit dem Rohstoff ein Sulfatträger zerkleinert wird und der Sulfatträger durch das Verfahren im Feingut angereichert wird.

2. Verfahren nach Anspruch 1,
**dadurch gekennzeichnet,**
**dass** als Mühle (11) eine Vertikalmühle mit einem Mahlteller (16) und mit Mahlwalzen (17) verwendet wird.

3. Verfahren nach Anspruch 1 oder 2,
**dadurch gekennzeichnet,**
**dass** die Mühle-Sichter-Kombination (10) im Luftstrommodus betrieben wird und
**dass** der zerkleinerte Rohstoff mittels eines Prozessgasstromes zum Sichter der Mühle-Sichter-Kombination (10) geführt wird.

4. Verfahren nach einem der Ansprüche 1 bis 3,
**dadurch gekennzeichnet,**
**dass** das Grobgut anteilig über eine mit einem Grießekonus (14) in Verbindung stehende Schnecke (15) abgezogen wird.

5. Verfahren nach einem der Ansprüche 1 bis 4,
**dadurch gekennzeichnet,**
**dass** die Zusammensetzung des Feingutes und damit des hydraulischen Bindemittels oder Zusatzstoffes für die Zementindustrie mittels des abgezogenen Grobgutes eingestellt wird.

6. Verfahren nach einem der Ansprüche 1 bis 5,
**dadurch gekennzeichnet,**
**dass** als Mehrphasen-Mineral-Rohstoff Portlandzementklinker verwendet wird, welcher zumindest die Phasen Alit und Belit aufweist, wobei Belit eine schlechtere Mahlbarkeit als Alit aufweist.

7. Verfahren nach einem der Ansprüche 1 bis 5,
**dadurch gekennzeichnet,**
**dass** als Mehrphasen-Mineral-Rohstoff Alinitzement verwendet wird, welcher zumindest die Phasen Alinit und Belit aufweist, wobei Belit eine schlechtere Mahlbarkeit als Alinit aufweist.

8. Verfahren nach einem der Ansprüche 1 bis 7,
**dadurch gekennzeichnet,**
**dass** das abgezogene Grobgut einer weiteren separaten Zerkleinerung zugeführt wird.

9. Verfahren nach einem der Ansprüche 1 bis 8,
**dadurch gekennzeichnet,**
**dass** das Grobgut, insbesondere Belit, zusammen mit Hüttensand weiter zerkleinert wird.

## Claims

1. Method for preparing multi-phase mineral raw materials for use as a binder or semi-finished binder product which have at least two different phases which each have mutually different degrees of grindability,
wherein the raw material is comminuted by means of grinding rollers (17) in a mill/screen combination (10),
wherein the mill/screen combination (10) has a screen (12) and a mill (11),
wherein at least once comminuted raw material is supplied to the screen of the mill/screen combination (10) and is screened at that location into coarse material and fine material,
wherein at least the fine material is supplied to a use as a hydraulic binder or additive material for the cement industry, **characterised in that**
at least a portion of 10 mol.% of the coarse material which is rejected by the screen (12) is drawn off from the mill/screen combination (10), wherein the portion of heavy millable phase of the coarse material is increased in the coarse material and the remaining coarse material is supplied to the mill (11) again, and
**in that** a sulphate carrier is comminuted with the raw material and the sulphate carrier is enriched by the method in terms of fine material.

2. Method according to claim 1,
**characterised in that**
a vertical mill having a grinding plate (16) and having grinding rollers (17) is used as the mill (11).

3. Method according to claim 1 or 2,
**characterised in that**
the mill/screen combination (10) is operated in air flow mode and **in that** the comminuted raw material is guided by means of a process gas flow to the screen of the mill/screen combination (10).

4. Method according to any one of claims 1 to 3,
**characterised in that**
the coarse material is proportionally removed via a worm (15) which is connected to a grit cone (14).

5. Method according to any one of claims 1 to 4,
**characterised in that**
the composition of the fine material and therefore of the hydraulic binder or additive material for the cement industry is adjusted by means of the removed coarse material.

6. Method according to any one of claims 1 to 5,
**characterised in that**
Portland cement clinker which has at least the phases alite and belite is used as the multi-phase mineral raw material, wherein belite has a poorer grindability than alite.

7. Method according to any one of claims 1 to 5,
**characterised in that**
alinite cement which has at least the phases alinite and belite is used as the multi-phase mineral raw material, wherein belite has a poorer grindability than alinite.

8. Method according to any one of claims 1 to 7,
**characterised in that**
the removed coarse material is supplied to an additional separate comminution operation.

9. Method according to any one of claims 1 to 8,
**characterised in that**
the coarse material, in particular belite, is further comminuted together with slag sand.

## Revendications

1. Procédé de préparation de matières premières minérales multiphases pour les utiliser comme liant ou comme produit semi-fini de liant, lesquels présentent au moins deux phases différentes qui possèdent chacune des broyabilités différentes entre elles, dans lequel la matière première est concassée au moyen de cylindres de broyage (17) dans une combinaison broyeur-séparateur (10),
dans lequel la combinaison broyeur-séparateur (10) présente un séparateur (12) et un broyeur (11),
dans lequel la matière première broyée au moins une fois est conduite au séparateur de la combinaison broyeur-sélecteur (10) où elle est séparée en matière grossière et matière fine,
dans lequel au moins la matière fine est affectée à une utilisation comme liant hydraulique ou comme additif pour l'industrie cimentière,
**caractérisé**
**en ce qu'**au moins une proportion de 10% en masse de la matière grossière rejetée par le séparateur (12) est évacuée de la combinaison broyeur-séparateur (10), la proportion de la phase plus difficilement broyable de la matière première étant accrue dans la matière grossière et le reste de la matière grossière étant réintroduit dans le broyeur (11) et
qu'avec la matière première, un support de sulfate est broyé et le support de sulfate est enrichi en matière fine par le procédé.

2. Procédé selon la revendication 1,
**caractérisé**
**en ce qu'**en guise de broyeur (11) est utilisé un broyeur vertical avec une table de broyage (16) et avec des cylindres de broyage (17).

3. Procédé selon la revendication 1 ou 2,
**caractérisé**
**en ce que** la combinaison broyeur-séparateur (10) fonctionne en mode flux d'air et que la matière première concassée est conduite au moyen d'un flux de gaz de procédé jusqu'au séparateur de la combinaison broyeur-séparateur (10).

4. Procédé selon une des revendications 1 à 3,
**caractérisé**
**en ce que** la matière grossière est extraite proportionnellement par une vis sans fin (15) en liaison avec un cône de refus (14).

5. Procédé selon une des revendications 1 à 4,
**caractérisé**
**en ce que** la composition de la matière fine et donc du liant hydraulique ou de l'additif pour l'industrie cimentière est ajustée au moyen de la matière grossière extraite.

6. Procédé selon une des revendications 1 à 5,
**caractérisé**
**en ce qu'**en guise de matière minérale multiphase est utilisée du clinker de ciment Portland qui présente au moins les phases alite et bélite, la bélite présentant une plus mauvaise broyabilité que l'alite.

7. Procédé selon une des revendications 1 à 5,
**caractérisé**
**en ce qu'**en guise de matière minérale multiphase est utilisé du ciment alinite qui présente au moins les phases alinite et bélite, la bélite présentant une plus mauvaise broyabilité que l'alinite.

8. Procédé selon une des revendications 1 à 7,
**caractérisé**
**en ce que** la matière grossière extraite est conduite à un autre concassage séparé.

9. Procédé selon une des revendications 1 à 8,
**caractérisé**
**en ce que** la matière grossière, en particulier la bélite, est de nouveau concassée avec du laitier granulé.
